Europäisches Patentamt

European Patent Office

Office européen des brevets

(19)

(11) **EP 0 811 854 A1**

(12) # DEMANDE DE BREVET EUROPEEN

(43) Date de publication:
**10.12.1997 Bulletin 1997/50**

(51) Int Cl.6: **G01S 13/56**, G01V 3/12,
G08B 21/00

(21) Numéro de dépôt: **97401251.0**

(22) Date de dépôt: **04.06.1997**

(84) Etats contractants désignés:
**AT BE CH DE DK ES FI FR GB GR IE IT LI LU MC NL PT SE**

(30) Priorité: **06.06.1996 FR 9606976**

(71) Demandeur: **OFFICE NATIONAL D'ETUDES ET DE RECHERCHES AEROSPATIALES (ONERA) 92320 Chatillon sous Bagneux (FR)**

(72) Inventeurs:
• **Lemaitre, François**
  **31500 Toulouse (FR)**
• **Poussiere, Jean-Claude**
  **31520 Ramonville (FR)**

(74) Mandataire: **Schrimpf, Robert**
  **Cabinet Regimbeau**
  **26, Avenue Kléber**
  **75116 Paris (FR)**

(54) **Procédé et dispositif pour la surveillance d'un site instable**

(57)   Procédé pour la surveillance d'un site instable, selon lequel on dispose au voisinage dudit site des moyens d'émission et de réception radar (1) et on observe ledit site avec ces moyens, caractérisé en ce qu'on traite les échos radar (1) réfléchis par au moins un point du site pour déterminer une distance.

FIG.1

EP 0 811 854 A1

**Description**

La présente invention est relative aux procédés et dispositifs pour la surveillance de sites instables.

Par "site instable", on désigne ici et dans toute la suite du texte toute zone terrestre qui fait l'objet de modifications dans le temps, que cette zone soit naturelle ou non, que ces modifications correspondent à des mouvements de grande échelle (fissuration d'un sol par exemple) ou qu'elles soient localisées dans le temps ou en certaines parties de la zone (chutes de blocs rocheux par exemple)

L'invention trouve notamment avantageusement application en volcanologie et sismologie.

Elle trouve également avantageusement application pour la surveillance de zones de sol naturel présentant des risques importants de chutes de blocs rocheux.

Classiquement, on utilise pour la surveillance de sites présentant des risques de chutes de blocs rocheux des détecteurs de rupture à fibres optiques ou encore des appareils de type distance-mètres à fils (extensomètres, fissuromètres, inclinomètres, ...) dédiés chacun à un bloc. Ces appareils sont également utilisés en sismologie et volcanologie.

Toutefois, ces techniques de surveillance sont peu satisfaisantes, puisqu'elles nécessitent d'équiper l'ensemble des points surveillés sur le site de dispositifs actifs.

On utilise également en sismologie et volcanologie des distance-mètres optiques.

Toutefois, les distance-mètres optiques, dont les mires sont coûteuses et fragiles, ne peuvent être laissés à demeure sur les sites et ne permettent que des mesures ponctuelles dans le temps et dans l'espace.

En outre, ils sont particulièrement sensibles aux données météorologiques et notamment à la présence de brume, de brouillard ou de pluie, qui conduisent à des portées très réduites, voire quasi nulles. Ceci les rend difficilement utilisables sur les sites volcanologiques situés sous des latitudes tropicales, ce qui est le cas pour un bon nombre de sites volcanologiques.

Les systèmes de radiolocalisation GPS en configuration différentielle peuvent également être utilisés comme distance-mètres. Ils ont l'avantage d'être peu sensibles aux conditions météorologiques.

Toutefois, ils se prêtent mal à la surveillance de zones d'éboulis ou de cônes volcaniques, puisqu'ils nécessitent un récepteur par point mesuré et que le matériel est exposé. Ils nécessitent également une source d'énergie locale.

Un but de l'invention est donc de proposer un procédé et un dispositif de surveillance de sites instables qui permettent de pallier les inconvénients des techniques de l'art antérieur.

On connaît déjà par US 4,300,121 un procédé pour la surveillance d'un site instable, selon lequel on dispose au voisinage dudit site des moyens d'émission et de réception radar et on observe ledit site avec ces moyens.

La technique décrite dans ce document ne permet toutefois pas de mesures de distances. Elle ne permet pas de suivre l'évolution d'un point particulier du site.

Selon le procédé proposé par l'invention, on traite les échos radar réfléchis par au moins un point du site pour déterminer une distance.

Ce procédé est avantageusement complété par les différentes caractéristiques suivantes prises seules ou selon toutes leurs combinaisons techniquement possibles :

- on dispose audit point un réflecteur ponctuel et on traite les échos radar pour déterminer la distance entre ce réflecteur et les moyens d'émission et de réception radar ;

- pour compenser des effets d'hétérogénéité d'humidité atmosphérique, on corrige la phase du signal d'écho en fonction d'une mesure de l'atténuation ;

- les moyens d'émission et de réception radar sont de type impulsionnel et pour la détermination de la distance, on met en oeuvre la succession d'étapes suivantes :

  . on traite le signal d'écho pour déduire de son retard par rapport à l'émission une valeur de distance,

  . on met en oeuvre un traitement de réponse impulsionnelle synthétisée et/ou un traitement d'hyperrésolution,

  . on analyse la phase du signal d'écho ;

- on dispose des réflecteurs ponctuels en plusieurs points du site et on traite en différentiel les mesures de distance entre ces différents points pour surveiller leurs mouvements relatifs ;

- pour la surveillance de départ de chute de blocs, on analyse les translations fréquentielles du signal d'écho radar et on émet un signal de détection de chute d'un bloc lorsque la puissance des translations fréquentielles dans une gamme de fréquences correspondant aux vitesses de chute d'un bloc, est supérieure à un seuil donné ;

- on met en oeuvre un traitement interférométrique entre deux acquisitions des moyens de réception radar.

L'invention propose également un dispositif pour la surveillance d'un site instable comportant des moyens d'émission et de réception radar, caractérisé en ce qu'il comporte des moyens de façon à traiter les échos radar (1) réfléchis par au moins un point du site pour déterminer une distance.

Ce dispositif comporte avantageusement une unité de gestion pour la mise en oeuvre des différents traitements du procédé précité.

Pour la mise en oeuvre des traitements interférométrique, les moyens d'émission et de réception radar sont avantageusement de type imageurs à synthèse d'ouverture (SAR ou "Synthetic Aperture Radar" selon la terminologie anglo-saxonne généralement employée par l'Homme du Métier).

D'autres caractéristiques et avantages de l'invention ressortiront encore de la description qui suit. Cette description est purement illustrative et non limitative. Elle doit être lue en regard des dessins annexés sur lesquels :

- la figure 1 est une représentation schématique illustrant une application possible de l'invention ;
- la figure 2 est une représentation schématique illustrant une autre application possible de l'invention ;
- les figures 3a et 3b sont des graphes sur lesquels on a porté respectivement l'atténuation et la valeur de co-indice en fonction de la masse volumique d'eau dans l'environnement du radar.

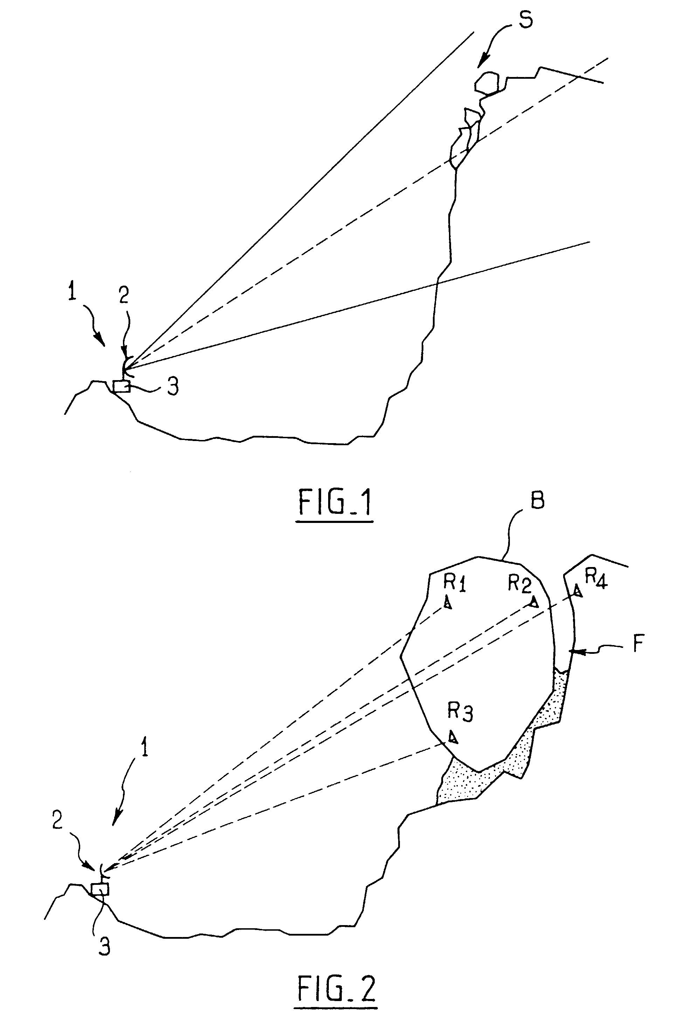

Sur la figure 1, on a illustré une surveillance de départs de chutes de blocs rocheux sur un site S donné.

Le dispositif utilisé à cet effet comporte un radar 1 à émission large bande, dont la fréquence d'émission est de l'ordre de 26 GHz et la largeur de bande de l'ordre de 2 GHz.

Ce radar 1 comporte une ou plusieurs antennes d'émission et de réception 2 à réflecteur parabolique.

Ces antennes 2 ont un gain de 34 dB et un angle d'ouverture à 3 dB de 2,7°. Le champ éclairé à 1 km a un diamètre de 50 m.

Une lunette de visée facilite le pointage de l'instrument en direction du site S surveillé. Celui-ci est situé à environ 500 m du radar 1.

Le radar 1 comporte également une unité de gestion 3, qui met en oeuvre sur les signaux reçus un traitement permettant de détecter les translations fréquentielles dues aux mouvements dans le champ d'observation.

Les moyens d'émission et de réception d'un tel radar 1 sont classiquement connus de l'Homme du Métier et ne seront pas ici particulièrement décrits.

L'environnement naturel d'un site observé étant rarement statique, la bande d'analyse des translations fréquentielles est limitée inférieurement de façon à éviter de détecter les signaux issus des mouvements de la végétation présente dans la scène.

La densité spectrale des échos de sol dépend de la nature de la végétation, de la vitesse du vent et de la fréquence utilisée. La distribution est sensiblement gaussienne avec un écart type de quelques dizaines de Hz.

Par ailleurs, afin de limiter le bruit, on impose une borne supérieure à la bande d'analyse.

Pour une application à la surveillance de départ de chute de blocs rocheux, telle qu'illustré sur la figure 1, une bande fréquentielle de 100 Hz à 1 KHz est particulièrement adaptée. Elle correspond à des vitesses radiales de 0,5 à 5 m par seconde.

L'unité 3 émet un signal d'alarme indiquant la détection de départ de blocs rocheux en chute lorsque la puissance reçue dans cette bande fréquentielle dépasse un seuil prédéterminé.

Bien entendu, des traitements de classification et d'identification, destinés par exemple à permettre d'éviter des fausses alarmes éventuelles dues aux passages d'oiseaux ou autres, sont envisageables.

Egalement, le dispositif peut utiliser une émission bifréquence et comprendre une seconde antenne en vue d'un traitement interféromètrique, permettant d'accéder à la trajectographie de la chute en temps réel, information qui peut être exploitée utilement dans la gestion de l'alarme.

L'unité de gestion 3 peut également comprendre des moyens d'estimation de la taille du bloc.

Comme on l'aura compris, le dispositif proposé par l'invention permet une surveillance globale d'un site S donné.

Il permet en particulier la détection de départs de chutes de blocs rocheux dans les quelques secondes qui suivent la mise en mouvement des blocs, sans nécessiter aucune instrumentation spécifique de ceux-ci.

D'autres types de surveillance sont bien entendu également possibles avec le procédé et le dispositif proposés par l'invention.

En particulier, le procédé et le dispositif proposés par l'invention peuvent être utilisés pour la mesures de distances sur un site.

A cet effet, on dispose en chacun du ou des points du site dont on veut déterminer la distance au radar 1 un réflecteur, par exemple triédrique.

Le radar étant de type impulsionnel, la détermination de sa distance au réflecteur s'effectue avantageusement selon les quatre étapes suivantes.

1/ La distance du réflecteur est repérée grossièrement en analysant le signal reçu en fonction du retard par rapport à l'émission. La précision est alors d'une longueur équivalente à la durée des impulsions émises (de l'ordre d'une dizaine de mètres pour des impulsions d'une durée de l'ordre de 100 ns).

2/ On met en oeuvre un traitement de réponse impulsionnelle synthétisée sur l'ensemble des fréquences de la bande d'émission, qui permet par exemple d'obtenir une résolution de l'ordre de 7, 5 cm pour une largeur de bande de 2 GHz.

3/ On met en oeuvre un traitement d'hyperrésolution, qui permet de positionner l'écho avec une précision qui dépend du rapport énergétique entre les signaux rétrodiffusés par le réflecteur d'une part et le bruit local d'autre part (le réflecteur étant dimensionné pour que ce rapport soit grand). Ce traitement d'hyperrésolution met par exemple en oeuvre des algorithmes de type PRONY ou de BURG, classiquement connus de l'Homme du Métier, qui exploitent le déphasage entre les parties inférieures et supérieures du spectre total utilisé pour la synthèse de la réponse impulsionnelle. Pour le radar 1 précédemment décrit, ce traitement permet une précision de localisation de 1 à 2 mm.

4/ On analyse ensuite la phase du signal rétrodiffusé, qui varie de 360° pour une variation de distance d'une demie longueur d'onde (6 mm). Ce dernier traitement permet d'affiner encore la mesure (avec une limite liée au rapport signal/bruit) pour finalement atteindre 0,05 mm.

En général des temps d'observation de l'ordre de la minute sont acceptables pour ce type d'application et conduisent à des rapports S/B importants.

En présence de plusieurs réflecteurs, on peut considérer qu'il est possible de les traiter indépendamment les uns des autres dès qu'ils sont séparés par une dizaine de cases distance soit 70 cm en distance radiale pour une bande d'émission de 2 GHz.

La limite ultime de cette technique dépend d'un certain nombre de facteurs tels que :

- précision absolue en fréquence de l'oscillateur pilote du radar (typiquement $10^{-6}$ à $10^{-8}$),
- précision des démodulateurs phase-quadrature (2° de précision en phase → 0,03 mm),
- le rapport signal à bruit global (bruit thermique + SER (Surface Equivalent Radar) environnement + bruit de phase),
- effets de la température sur le dispositif (dérives),
- variation de l'indice de réfraction de l'air ambiant avec les conditions météorologiques, particulièrement la teneur en vapeur d'eau dont l'effet est plus sensible aux micro-ondes qu'en optique.

On notera toutefois qu'en mode différentiel et avec des écarts de distance faibles (quelques centaines de mètres), les perturbations induites par ce dernier effet restent acceptables.

Par ailleurs, l'exploitation de la phase de la porteuse peut utiliser une information sur la nature de l'objet diffractant.

D'autres traitements sont bien entendu possibles. En particulier, il est possible de s'affranchir du traitement de réponse impulsionnelle par synthèse et de traiter directement la phase du signal de l'impulsion physique.

Ceci permet un suivi en temps réel des variations rapides de distance (quelques dizaines de Hz). Par contre, le rapport signal/bruit est plus faible (temps d'observation par mesure réduite, niveau de fouillis plus important). Egalement, il est nécessaire de séparer les réflecteurs d'une distance importante, fonction de la durée de l'impulsion physique.

Enfin, l'ambiguïté de la mesure est égale à λ/2 ; cette ambiguïté peut toutefois être levée si l'observation est faite en continu.

Cette variante de réalisation est avantageusement utilisée pour l'observation à distance de séismes ou de mouvements rapides importants.

La mesure de distances qui vient d'être décrite peut être utilisée, ainsi qu'on l'a illustré sur la figure 2, pour la surveillance de mouvements lents sur un site instable, par exemple pour la surveillance de l'évolution d'une faille sur un sol naturel.

Dans l'exemple illustré sur ladite figure 2, on surveille un gros bloc rocheux B susceptible de s'ébouler, ainsi que la faille F entre ce bloc B et la zone du site dont ledit bloc se détache.

Trois réflecteurs triédriques R1 à R3 sont répartis sur le bloc B.

Le réflecteur R3 est disposé à proximité de la faille F, tandis que les réflecteurs R1 et R2 sont de l'autre côté du bloc B.

Un réflecteur R4 est disposé de l'autre côté de la faille F à proximité du réflecteur R3.

Un traitement différentiel sur les mesures des distances du radar 1 aux quatre réflecteurs R1 à R4 permet un suivi des mouvements du bloc B

En particulier, les mesures différentielles sur R1 et R2, ainsi que sur R1 et R3 permettent de connaître les mouvements de rotation du bloc respectivement selon deux axes perpendiculaires à l'axe de visée du radar 1.

Les mesures différentielles de distance entre R2 et R4 permettent de surveiller l'ouverture de la faille.

Les écarts de distance entre les réflecteurs R1 à R4 étant faibles (supérieurs à 70cm), les compensations des effets atmosphériques - qui seront décrites plus loin de façon plus détaillée - sont superflues.

Avec les traitements de mesures de distances décrits précédemment, on obtient une précision de mesure différentielle inférieure à 0,1 mm ce qui correspond, pour un bloc de 10 m de large à une précision angulaire de 10 micro radians.

A titre de comparaison, la précision angulaire obtenue sur une nivelle à vis micrométrique est de $4.10^4$ radian et $2.10^{-4}/2.10^{-5}$ pour un inclinomètre de forage. Pour la mesure de failles, les précisions des extensomètres à base courte et des fissuromètres à pige centrale sont de 0,1 mm, soit sensiblement identique au dispositif proposé.

Par ailleurs, la mesure de l'écartement d'une faille qui évolue dans une direction normale à l'axe de visée du radar peut être effectuée en ajoutant d'un côté ou de l'autre de la faille un réflecteur plan orienté à 45° par rapport à la direction de celle-ci.

Ainsi, avec le procédé et le dispositif proposés par l'invention, il est possible de surveiller les mouvements d'un ensemble de blocs ou de failles, sans avoir à équiper la zone observée de capteurs actifs.

Une autre application encore possible pour l'invention est le suivi dans le temps des modifications intervenant sur un site par traitement interférométrique.

On met en oeuvre dans ce cas une différence entre les réponses impulsionnelles obtenues pour deux observations du site.

On peut également cartographier directement le déplacement local en recherchant le maximum du produit d'intercorrélation des deux réponses impulsionnelles, pondéré localement au voisinage du point considéré.

L'étendue spatiale de cette fonction de pondération correspond à la dimension des zones de déplacements supposés homogène (ordre de grandeur en volcanologie : 10 m).

Compte tenu de l'importance de ces dimensions de zones, les levées d'ambiguïté sont facilitées. La mesure d'un déplacement pour une zone donnée exploite en effet les informations d'un grand nombre de pixels (quelques centaines au lieu de 1).

Les images obtenues correspondent à des profils de distance dans le cas unidimensionnel qui a été jusqu'ici décrit, ou à des cartographies complètes, si l'on utilise des radars SAR.

On notera que l'utilisation de radars de type SAR à terre permet des résolutions de 1 à 2 échelles de grandeurs inférieures par rapport aux techniques d'interférométrie utilisant des radars SAR satellitaires.

Un SAR terrestre présente également un avantage important en coût.

En outre, contrairement aux radars satellitaires qui ne permettent des mesures qu'aux passages des satellites à la verticale du site observé, les radars SAR proposés par l'invention présentent une disponibilité et une cadence des informations parfaitement adaptées aux besoins de la volcanologie ou de la sismologie.

Egalement, l'interférométrie SAR terrestre ne nécessite aucune compensation entre les deux prises de vue,

Son bilan énergétique est par ailleurs très favorable (distance, temps d'observation disponible).

Pour les différentes applications qui mettent en oeuvre un calcul de distance, on complète avantageusement les traitements qui viennent d'être décrits par une compensation des effets d'hétérogénéité d'humidité de l'environnement d'observation.

Une telle compensation se fait par exemple à partir d'une mesure absolue ou différentielle de l'atténuation sur le trajet optique.

On sait en effet que la présence d'eau vapeur dans l'atmosphère affecte simultanément la vitesse de phase et l'atténuation des ondes électromagnétiques. Ces modifications de vitesse de phase et d'atténuation, qui s'intègrent le long du trajet, sont donc corrélées.

Selon le traitement proposé, on corrige la phase du signal de mesure de distance à partir d'une mesure de l'atténuation.

Pour une fréquence donnée, l'atténuation est fonction de la pression partielle de vapeur d'eau.

A titre d'exemple, pour un contenu en eau de 7 g/$m^3$, les atténuations typiques sont :

| à 22 GHz | 0,5 dB/km (raie d'absorption) |
| à 80 GHz | 0,3 dB/km |

(suite)

| à 100 GHz | 0,6 dB/km |
| à 180 GHz | 40 dB/km (raie d'absorption). |

Par conséquent, la compensation sera particulièrement efficace pour des fréquences de fonctionnement au voisinage de 22,2 GHz ou entre 100 et 180 GHz, bande dans laquelle l'atténuation évolue progressivement avec la fréquence.

Plus précisément, la compensation s'effectue de la manière suivante :

1) On mesure la température et la pression atmosphérique (en 1 ou 2 points).

2) On calcule à partir des données ainsi obtenues la masse volumique de la vapeur d'eau à saturation, puis l'atténuation $Av_{max}$ correspondante.

3) On mesure l'atténuation A réelle sur le trajet optique

$$* \ Si \ A < Av_{max}$$

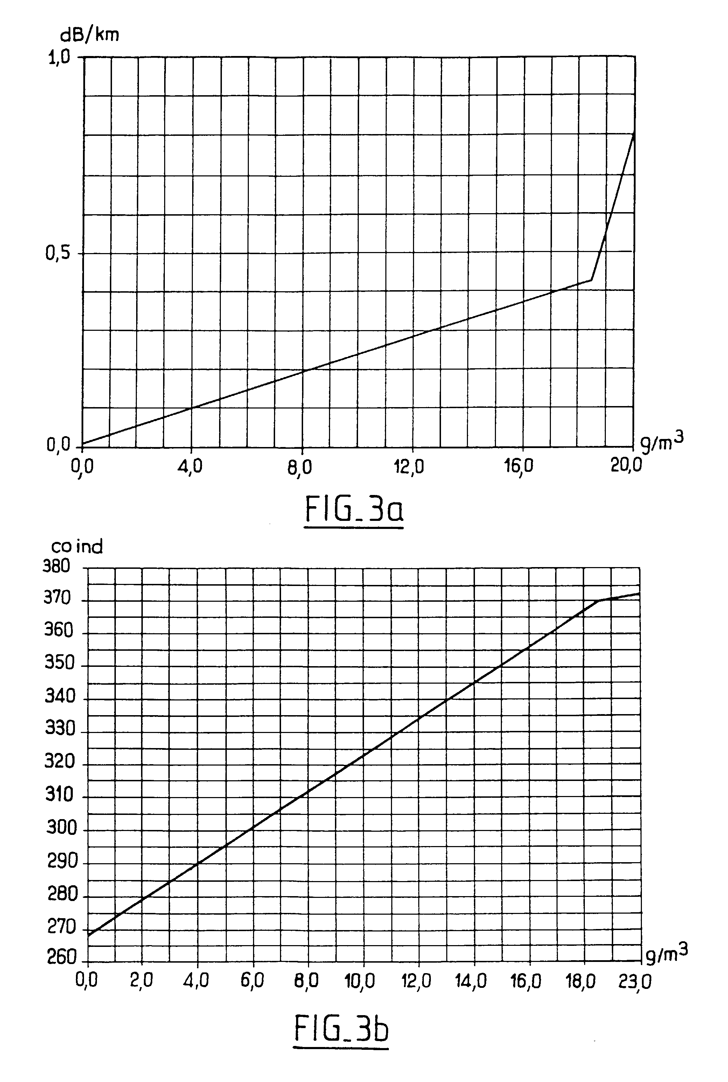

On considère que seule la phase vapeur existe et on convertit l'atténuation réelle A en une valeur de co-indice permettant la correction de la phase. A cet effet, on peut dans un premier temps déterminer la valeur de masse volumique d'eau totale (vapeur + liquide) en fonction de l'atténuation réelle A, puis dans un deuxième temps déterminer à partir de cette masse volumique la valeur du coefficient appelé co-indice "N" moyen sur le trajet. Le co-indice N est défini à partir de l'indice de réfraction "n" par l'expression : $N = (n-1).10^6$. Une unité d'erreur sur la valeur de N correspond à une erreur relative sur la mesure de distance de 1 ppm soit 1 mm par km. On donne sur les figures 3a et 3b les variations des valeurs d'atténuation et du co-indice (valeurs USI) en fonction de la masse volumique d'eau permettant ces conversions. Ces graphes correspondent à une fréquence d'émission pour le radar de 22 GHz, ainsi qu'à une température ambiante de 20°C et une pression atmosphérique de 1 atm.

$$* \ Si \ A > Av_{max}$$

On considère qu'on est en présence des deux phases et que la phase vapeur est saturée.

On détermine en fonction de A et de $Av_{max}$ en utilisant un modèle standard la teneur en eau-vapeur et en eau-liquide et on convertit ces données en valeur de co-indice, par exemple en utilisant les données de la figure 3b

4) On compense la mesure de phase en fonction du co-indice ainsi déterminé.

Dans la méthode proposée, on considère que les variations de niveau observées (intégrées sur une période d'observation longue qui peut aller de quelques minutes à quelques heures) sont principalement dues à un phénomène d'absorption par la vapeur d'eau ou par les hydrométéores.

D'autres effets atmosphériques sont susceptibles de générer des variations de niveau du signal. Si l'effet de scintillation peut être réduit par un moyennage dans le temps, il peut toutefois exister des conditions particulières telles que fortes pluies, multitrajet (fading) qui mettent en défaut la méthode. On prévoit par conséquent avantageusement des moyens pour détecter ces conditions par une analyse des fluctuations de niveau observées.

La mesure d'atténuation peut en variante se faire en différentiel sur deux fréquences, par exemple 80 et 100 GHz, ce qui permet d'obtenir une meilleure précision sur la mesure de la teneur en eau.

Egalement, la mesure d'atténuation peut se faire sur une autre fréquence que celle sur laquelle fonctionne le distance-mètre lui-même, ce qui permet une architecture simplifiée pour le radar. La mesure de la teneur en eau alors effectuée est indépendante du distance-mètre et peut être fournie indépendamment de celui-ci à l'opérateur.

Inversement, la mesure brute délivrée par le distance-mètre non compensé en visée sur des points réputés fixes peut être considérée comme une mesure de l'indice de réfraction intégré sur le trajet de propagation.

**Revendications**

1. Procédé pour la surveillance d'un site instable, selon lequel on dispose au voisinage dudit site des moyens d'émission et de réception radar (1) et on observe ledit site avec ces moyens, caractérisé en ce qu'on traite les échos radar (1) réfléchis par au moins un point du site pour déterminer une distance.

2. Procédé selon la revendication 1, caractérisé en ce qu'on dispose audit point un réflecteur ponctuel (R1 à R4) et en ce qu'on traite les échos radar pour déterminer la distance entre ce réflecteur et les moyens d'émission et de réception radar (1).

3. Procédé selon l'une des revendications précédentes, caractérisé en ce que pour compenser des effets d'hétérogénéité d'humidité atmosphérique, on corrige la phase du signal d'écho en fonction d'une mesure de l'atténuation.

4. Procédé selon l'une des revendications précédentes, caractérisé en ce que les moyens d'émission et de réception radar (1) sont de type impulsionnel et en ce que pour la détermination de la distance, on met en oeuvre la succession d'étapes suivantes :

- on traite le signal d'écho pour déduire de son retard par rapport à l'émission une valeur de distance,
- on met en oeuvre un traitement de réponse impulsionnelle synthétisée et/ou un traitement d'hyperrésolution,
- on analyse la phase du signal d'écho.

5. Procédé selon l'une des revendications précédentes, caractérisé en ce qu'on dispose des réflecteurs ponctuels (R1 à R4) en plusieurs points du site et en ce qu'on traite en différentiel les mesures de distance entre ces différents points pour surveiller leurs mouvements relatifs.

6. Procédé selon l'une des revendications précédentes, caractérisé en ce que pour la surveillance de départ de chute de blocs (B), on analyse les translations fréquentielles du signal d'écho radar (1) et on émet un signal de détection de chute d'un bloc (B) lorsque la puissance des translations fréquentielles dans une gamme de fréquences correspondant aux vitesses de chute d'un bloc (B), est supérieure à un seuil donné.

7. Procédé selon l'une des revendications précédentes, caractérisé en ce qu'on met en oeuvre un traitement interférométrique entre deux acquisitions des moyens de réception radar (1).

8. Dispositif pour la surveillance d'un site instable comportant des moyens d'émission et de réception radar (1), caractérisé en ce qu'il comporte des moyens de façon à traiter les échos radar (1) réfléchis par au moins un point du site pour déterminer une distance.

9. Dispositif selon la revendication 8, caractérisé en ce qu'il comporte une unité de gestion pour la mise en oeuvre des différents traitements du procédé selon l'une des revendications 2 à 7.

10. Dispositif selon l'une des revendications 8 et 9, caractérisé en ce que pour la mise en oeuvre du procédé selon la revendication 7, les moyens d'émission et de réception radar (1) sont de type SAR.

FIG.1

FIG.2

7

FIG. 3a

FIG. 3b

EP 0 811 854 A1

Office européen
des brevets

**RAPPORT DE RECHERCHE EUROPEENNE**

Numero de la demande

EP 97 40 1251

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| Y | US 4 300 121 A (FRITZSCHE WILFRIED) 10 Novembre 1981 | 1,2,5,8 | G01S13/56 G01V3/12 G08B21/00 |
| A | * le document en entier * | 7 | |
| Y | US 4 885 591 A (PAGE RONALD D) 5 Décembre 1989 * colonne 2 * | 1,2,5,8 | |
| A | WO 96 12201 A (CENTRE NAT ETD SPATIALES ;MASSONNET DIDIER HENRI (FR)) 25 Avril 1996 * le document en entier * | 2,7,10 | |
| A | GB 2 200 008 A (THORN EMI ELECTRONICS LTD) 20 Juillet 1988 * abrégé * | 4 | |
| A | US 5 122 732 A (ENGELER WILLIAM E ET AL) 16 Juin 1992 * le document en entier * | 4 | |

**DOMAINES TECHNIQUES RECHERCHES (Int.Cl.6)**

G01S
G01V
G08B

Le présent rapport a été établi pour toutes les revendications

| Lieu de la recherche | Date d'achèvement de la recherche | Examinateur |
|---|---|---|
| LA HAYE | 8 Septembre 1997 | Zaccà, F |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant